# DEMANDE DE BREVET EUROPEEN

(11) **EP 1 319 587 A1**
(43) Date de publication de la demande: **18.06.2003**
(21) Numéro de dépôt: 02356244.0
(22) Date de dépôt: 27.11.2002
(51) Int. Cl.: B62D 49/06, B62D 33/063, B62D 53/02

(54) **Porte-outils pour culture en lignes et utilisation d'un tel porte-outils**

(30) Priorité: 13.12.2001 FR 0116158
(71) Demandeur: Bonnefond, Olivier, 26160 La Batie Rolland (FR)
(72) Inventeur: Bonnefond, Olivier, 26160 La Batie Rolland (FR)
(74) Mandataire: Myon, Gérard

(57) **Abrégé**

Le châssis (1) de ce porte-outils (M) comprend un demi-châssis antérieur (10) et un demi-châssis postérieur (20) articulés l'un sur l'autre en partie haute (40) dudit châssis (1), chaque demi-châssis ayant, en vue par l'avant ou par l'arrière, une forme globalement en U renversé. Les demi-châssis (10, 20) sont aptes à pivoter l'un par rapport à l'autre autour d'un axe (Z-Z') vertical, ce qui permet de diriger le porte-outils (M). Une nacelle de pilotage (6) est montée sur une branche (23) de l'un des U formés par les demi-châssis (10, 20).

## Description

L'invention a trait à un porte-outils pour culture en ligne pouvant être utilisé dans plusieurs configurations, notamment dans le domaine viticole. L'invention a également trait à une utilisation de ce porte outils dans le domaine viticole.

Dans le domaine viticole, plusieurs types de machine peuvent être utilisés à différentes étapes de la culture et la conduite de la vigne. En effet, au cours d'une année, divers travaux doivent être effectués sur les pieds de vigne, qu'il s'agisse de la pré-taille ou de la taille de la vigne, du traitement avec des produits phyto-sanitaires, du désherbage chimique ou mécanique, de l'épamprage des pieds de vigne, de leur rognage ou de leur effeuillage, ou enfin du relevage de leurs branches, du broyage des sarments, etc ....

Les machines utilisées à ce jour pour ces opérations comprennent les tracteurs interlignes, les tracteurs enjambeurs et les machines à vendanger.

Les tracteurs interlignes ont une largeur faible imposée par l'espacement des rangées de vigne à travailler, de sorte que les outils et accessoires qu'ils portent sont nécessairement disposés en avant ou en arrière du tracteur, en étant en porte-à-faux, ce qui n'est pas satisfaisant sur le plan mécanique. En outre, la puissance transmissible à ces matériels est souvent limitée et des organes de commandes doivent être ajoutés ou adaptés aux matériels. Enfin, chaque nouveau matériel demande une adaptation spécifique au tracteur interligne sur lequel on prévoit de le monter.

Les tracteurs enjambeurs, tels que connus, par exemple, de FR-A-2 678 888, sont des machines très élaborées dont le coût est dissuasif pour la plupart des exploitants. Chaque outil ou accessoire devant être utilisé avec un tracteur enjambeur doit être adapté spécifiquement à ce type de matériel, ce qui induit des coûts supplémentaires. La cabine d'un tracteur enjambeur est située à l'avant, d'où une visibilité arrière limitée, ce qui peut s'avérer gênant lors de certains travaux. Enfin, le centre de gravité et la cabine d'un tracteur enjambeur sont élevés au-dessus de la rangée de vigne, d'où un risque de basculement potentiellement dangereux pour l'utilisateur et une visibilité limitée sur la zone de travail.

Outre leur coût très élevé, les machines à vendanger présentent les mêmes inconvénients que les tracteurs enjambeurs en ce qui concerne le défaut de visibilité vers l'arrière et la hauteur de leur centre de gravité. Elles doivent généralement être lestées lorsqu'elles ne sont pas équipées d'une cuve de collecte du raisin, ce qui induit un tassement des sols au voisinage des pieds de vigne. En outre, les opérations de montage et de démontage du lest et des accessoires autres que la tête de vendange sur une machine à vendanger sont complexes et peuvent diminuer la fiabilité de ce type de matériel, ce qui incite les exploitants à réserver une telle machine pour la seule vendange. Certains utilisateurs ont pu envisager de monter une structure d'interface entre la machine à vendanger et les outils à utiliser. Une telle structure est lourde et relativement complexe, donc onéreuse.

Dans un domaine autre que viticole, il est connu de US-A-5,209,320 de réaliser un engin agricole formé de deux cadres articulés l'un sur l'autre et dont le cadre avant supporte un poste de pilotage, avec les mêmes inconvénients en matière de visibilité et de hauteur du centre de gravité que les matériels cités précédemment.

C'est à ces inconvénients qu'entend plus particulièrement remédier l'invention en proposant un porte-outils pour culture en lignes, telles que la vigne, qui présente une grande adaptabilité et une bonne stabilité dynamique, tout en ayant un poids largement inférieur aux machines à vendanger et en étant très maniable, ce qui permet de l'utiliser dans une vigne ou d'autres cultures pour différentes opérations, alors que la vision du pilote depuis le poste de pilotage est satisfaisante.

Dans cet esprit, l'invention concerne un porte-outils comprenant un châssis enjambeur apte à supporter des outils de culture et de conduite de la vigne, ce châssis comprenant un demi-châssis antérieur et un demi-châssis postérieur articulés l'un sur l'autre en partie haute du châssis, chaque demi-châssis ayant, en vue par l'avant ou par l'arrière du porte-outils, une forme globalement en U renversé, ces demi-châssis étant aptes à pivoter l'un par rapport à l'autre autour d'un axe globalement perpendiculaire à une surface sur laquelle repose ce porte-outils. Ce porte-outils est caractérisé en ce qu'il comprend une nacelle de pilotage montée sur une branche de l'un des U formés par les demi-châssis.

Grâce à l'invention, les deux demi-châssis, qui sont articulés autour d'un axe vertical lorsque la machine repose sur un sol horizontal, permettent, par leur positionnement relatif, de diriger la machine, ce qui évite d'avoir recours à des systèmes de direction complexes et onéreux, montés sur chaque roue. En outre, le châssis enjambeur peut avoir une hauteur suffisante pour passer au-dessus des rangées de vigne, sans pour autant que le poste de pilotage intégré à la nacelle ou le système de motorisation ne soient disposés au-dessus de ces rangées, ce qui permet que le centre de gravité du porte-outils soit bas. La visibilité à partir du poste de pilotage est excellente, en particulier en direction de la zone de travail. Les outils sont montés sans porte-à-faux notable par rapport aux roues avant ou arrière de la machine.

Le porte-outils est stable sur le plan mécanique, ce qui évite d'avoir recours à des lests et/ou arceaux tels qu'utilisés habituellement avec les machines à vendanger et les tracteurs. Le temps de montage et démontage des différents outils est relativement court, du fait d'une bonne accessibilité aux zones de montage des outils. En outre, grâce à la structure du châssis, le rayon de braquage du porte-outils peut être relativement court, ce qui améliore sa maniabilité, alors que son poids total demeure en deçà de celui des machines connues, d'où un moindre tassement du sol à proximité des rangées de vigne.

Enfin, la nacelle qui intègre le poste de pilotage du porte-outils et se trouve à une hauteur très commode, tant en ce qui concerne son accessibilité à partir du sol qu'en ce qui concerne sa vision de la zone de travail des outils.

L'invention a également trait à une utilisation d'un porte-outils tel que précédemment décrit dans le domaine viticole, pour la culture de la vigne.

D'autres caractéristiques avantageuses de l'invention ressortent des revendications ci-annexées.

L'invention sera mieux comprise et d'autres avantages de celle-ci apparaîtront plus clairement à la lumière de la description qui va suivre de trois modes de réalisation d'un porte-outil conforme à son principe, donnée uniquement à titre d'exemple et faite en référence aux dessins annexés dans lesquels :
- la figure 1 est une représentation schématique de principe en perspective d'un porte-outils conforme à l'invention dans une première configuration d'utilisation ;
- la figure 2 est une vue de dessus du porte-outils de la figure 1 en position d'avance en ligne droite ;
- la figure 3 est une vue de dessus analogue à la figure 2, lorsque le porte-outils est en position de virage à gauche ;
- la figure 4 est une vue de côté, par la gauche, du porte-outils dans la configuration des figures 1 et 2 ;
- la figure 5 est une vue de côté, par la droite, du porte-outils dans la configuration des figures 1 et 2 ;
- la figure 6 est une vue de dessus du porte-outils dans une autre configuration d'utilisation ;
- la figure 7 est une vue analogue à la figure 1 pour un porte-outils conforme à un second mode de réalisation de l'invention ;
- la figure 8 est une vue de dessus du porte-outils de la figure 7
- la figure 9 est une vue de dessus du porte-outils des figures 7 et 8 dans une seconde configuration d'utilisation ;
- la figure 10 est une vue analogue à la figure 1 pour un porte-outils conforme à un troisième mode de réalisation de l'invention ;
- la figure 11 est une vue de dessus du porte-outils de la figure 10 ;
- la figure 12 est une vue analogue à la figure 10, alors que le porte-outils est dans une seconde configuration d'utilisation ;
- la figure 13 est une vue de dessus du porte-outils dans la configuration de la figure 12 et
- la figure 14 est une vue de face du porte-outils dans la configuration des figures 12 et 13.

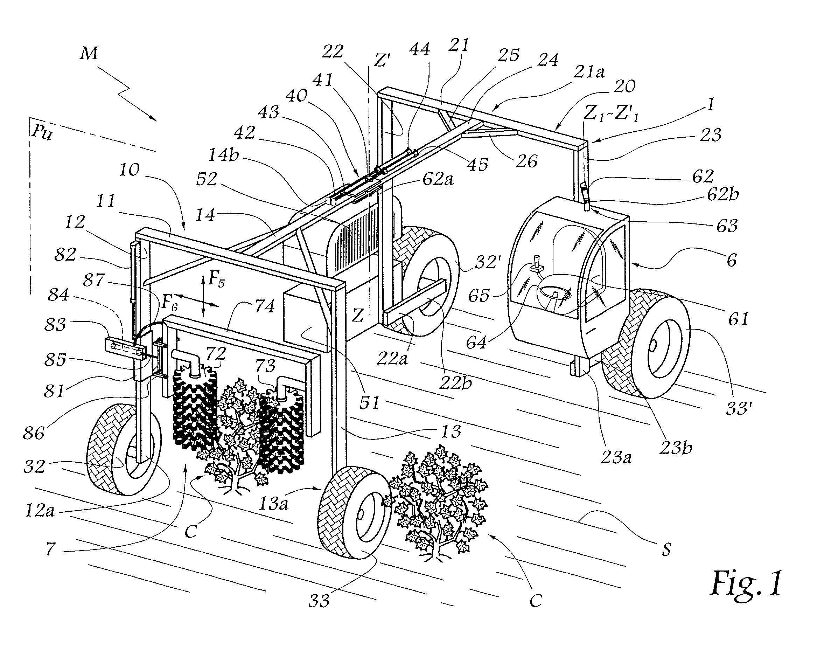

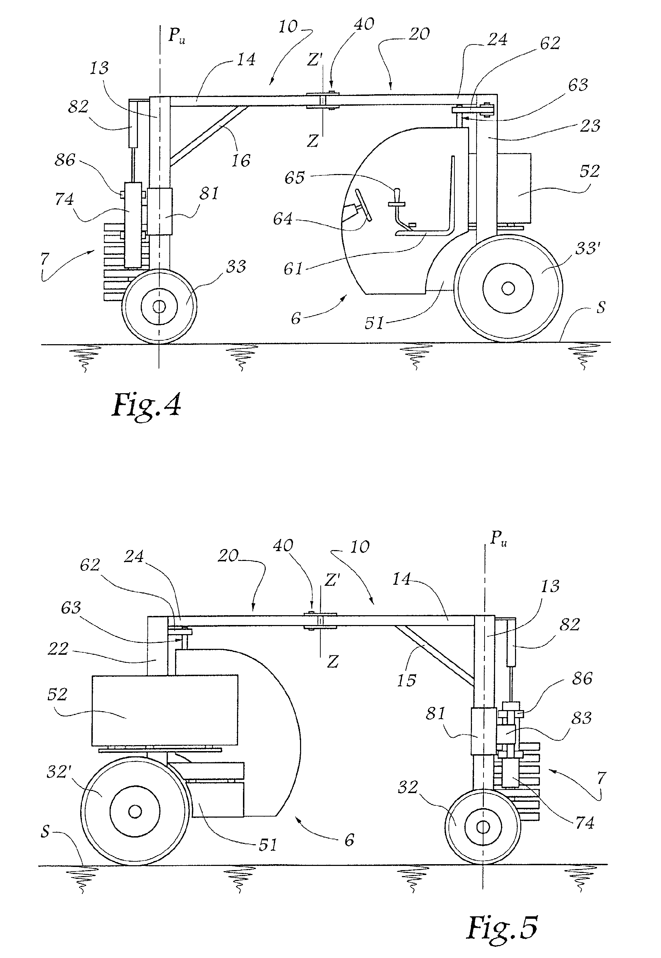

La machine M représentée aux figures 1 à 6 constitue un porte-outils et comprend un châssis 1 formé d'une structure mécano-soudée en profilés métalliques dont la section est de l'ordre de 100 mm par 200 mm. Le châssis 1 est formé d'un demi-châssis antérieur 10 et d'un demi-châssis postérieur 20.

Le demi-châssis 10 comprend une traverse horizontale 11 et deux branches 12 et 13 s'étendant chacune vers le bas à partir de la traverse 11 selon une direction globalement perpendiculaire à la traverse 11, de telle sorte qu'elles forment avec celle-ci une structure globalement en forme de U renversé, c'est-à-dire dont les branches 12 et 13 sont orientées vers le bas à partir de sa base 11.

Une poutre 14 est fixée sur la partie médiane 11a de la traverse 11 et s'étend selon une direction globalement perpendiculaire à un plan P_{U} défini par les axes longitudinaux des éléments 11 à 13. Deux renforts 15 et 16 s'étendent entre la poutre 14 et les branches 12 et 13 en contribuant à la rigidité de l'assemblage entre les éléments 11 et 14.

Au niveau de leurs extrémités libres respectives 12a et 13a, les branches 12 et 13 sont chacune équipées d'une roue 32 et 33 susceptible de tourner chacune autour d'un axe géométrique A₃₂, respectivement A₃₃, fixe par rapport à la branche 12, respectivement 13. En d'autres termes, l'orientation des roues 32 et 33 est fixe par rapport à celle du U formé des éléments 11 à 13.

Le châssis 20 comprend une traverse 21 associée à des branches 22 et 23 pour former une structure globalement en forme de U renversé. Les extrémités libres 22a et 23a des branches 22 et 23 sont respectivement équipées de poutrelles 22b et 23b qui supportent, au niveau de leurs extrémités distantes des branches 22 et 23, des roues 32' et 33' analogues aux roues 32 et 33 et susceptibles de tourner autour d'axes géométriques d'articulation A'₃₂ et A'₃₃ fixes par rapport à la structure en U formée des éléments 21 à 23.

Sur la partie médiane 21a de la traverse 21 est fixée une poutre 24, alors que les renforts 25 et 26 contribuent à la rigidité de l'assemblage ainsi formé.

Une articulation 40 relie les extrémités 14a et 24a des poutres 14 et 24 opposées aux traverses 11 et 21, de telle sorte que les poutres 14 et 24 peuvent pivoter l'une par rapport à l'autre autour d'un axe Z-Z' globalement perpendiculaire à la surface S du sol sur laquelle repose la machine M. Lorsque la surface S est horizontale, l'axe Z-Z' est sensiblement vertical.

Ainsi, le demi-châssis 10 peut pivoter au niveau de l'articulation 40 par rapport au demi-châssis 20, autour de l'axe vertical Z-Z' lorsque la surface S est horizontale, ce qui permet de diriger les roues 32 et 33.

L'articulation 40 peut être réalisée de toute façon appropriée. Par exemple, l'extrémité 14a de la poutre 14 peut comprendre deux branches prenant en chape l'extrémité 24a de la poutre 24, ces extrémités étant traversées par un axe ou goujon 41.

Des moyens d'ajustement de la position angulaire du demi-châssis 10 par rapport au demi-châssis 20 sont prévus sous la forme de câbles 42 et 43 dont une extrémité est solidaire de pattes de fixation 14b prévues sur la poutre 14 et dont l'autre extrémité est respectivement reliée à des vérins hydrauliques 44 et 45 commandés par tout moyen approprié. Ils pourraient également être remplacés par des crémaillères et, plus généralement, par tout moyen permettant de contrôler l'orientation relative des poutres 14 et 24 autour de l'axe Z-Z'.

Pour la clarté du dessin, les éléments 42 à 45 sont représentés uniquement à la figure 1.

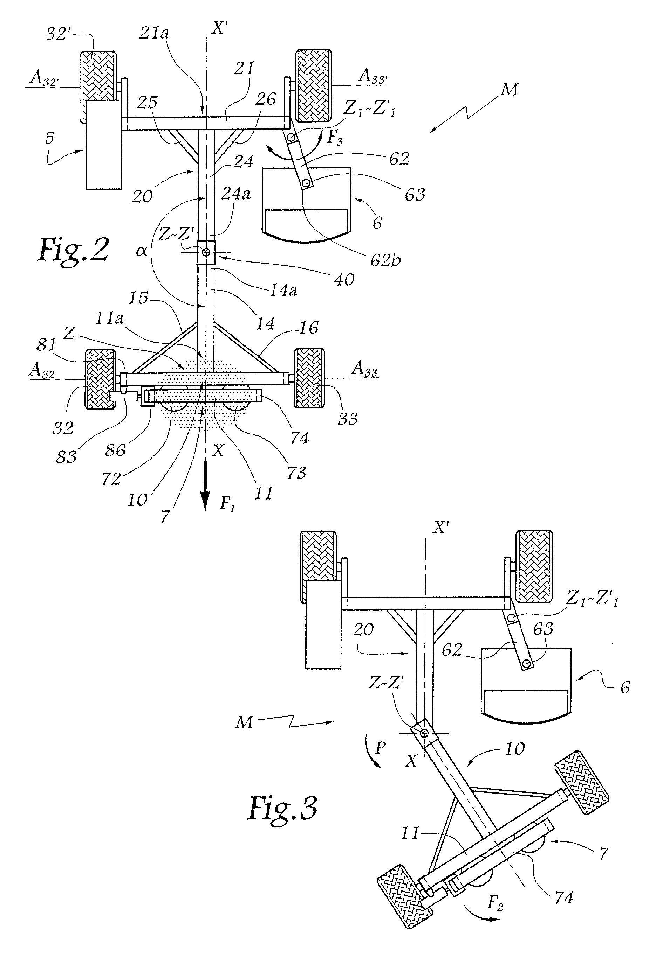

Lorsque le porte-outils doit progresser selon une direction rectiligne représentée par la flèche F₁ à la figure 2, les poutres 14 et 24 sont sensiblement alignées, de part et d'autre de l'axe Z-Z', l'angle α entre ces poutres étant égal à environ 180°

Lorsqu'on souhaite que le porte-outils M tourne vers la gauche, on agit sur les vérins 44 et 45 pour faire pivoter le demi-châssis 10 par rapport au demi-châssis 20, comme représenté par la flèche P, ce qui revient à diminuer l'angle α, comme représenté à la figure 3, auquel cas le porte-outils suit une trajectoire courbe représentée par la flèche F₂ à la figure 3.

Un ensemble de motorisation 5 est monté sur la branche 22 du demi-châssis postérieur 20, à proximité de la roue 32', ce qui permet de conserver le centre de gravité du porte-outils M relativement bas. Cet ensemble de motorisation comprend un moteur thermique 51 associé à un ensemble hydraulique 52 qui permet de commander des moteurs hydrostatiques disposés dans les moyeux des roues 32' et 33' et les vérins 44 et 45. L'ensemble 52 permet également d'entraîner un outil monté sur le demi-châssis 10, comme indiqué ci-dessous en référence à la prétailleuse 7. En variante, les roues 32 et 33 peuvent également être motrices, auquel cas des moteurs hydrostatiques sont également prévus dans leurs moyeux respectifs et alimentés par l'ensemble 52.

Une nacelle 6 est prévue pour constituer le poste de pilotage du porte-outils M. Elle contient un siège 61 pour l'opérateur. La nacelle 6 est suspendue à une poutre 62 articulée sur la branche 23 du demi-châssis 20. L'articulation de la poutre 62 sur la branche 23 est telle que la poutre 62 peut pivoter également autour d'un axe Z₁-Z'₁ parallèle à l'axe Z-Z', comme représentée par la flèche F₃ à la figure 2.

On note 62a l'extrémité d'articulation de la poutre 62 sur la branche 23. A son extrémité 62b opposée à l'extrémité 62a, la poutre 62 est pourvue d'une articulation 63 au niveau de laquelle est suspendue la nacelle 6. Cette articulation 63 est configurée de telle sorte que la nacelle 6 conserve une orientation globalement parallèle à un axe médian X-X' de la machine M en configuration d'avance en ligne droite.

En outre, l'articulation 63 est pendulaire, ce qui permet à la nacelle 6 de conserver une assiette satisfaisante indépendamment de la planéité ou de la pente de la surface S.

La nacelle 6 est équipée d'un volant 64 permettant de commander les vérins 44 et 45 d'orientation relative des poutres 14 et 24 autour de l'axe Z-Z'. En d'autres termes, le volant 64 permet de commander la direction d'avance du porte-outils M.

La nacelle 6 est équipée d'origine d'une manette 65 de commande d'un outil monté sur le demi-châssis 10, cette manette étant bien intégrée dans la nacelle 6 sur le plan ergonomique et fonctionnel, de sorte qu'il n'est pas nécessaire de prévoir des ajouts dans un habitacle déjà encombré, comme c'est généralement le cas avec un tracteur.

Une pré-tailleuse 7 est montée sur le demi-châssis 10, entre les branches 12 et 13. Cette pré-tailleuse 7 comprend deux roues de pré-taillage 72 et 73 destinées à être entraînées par l'ensemble hydraulique 52. Les roues 72 et 73 sont montées sur un portique 74 et constitue avec celui-ci la prétailleuse 7.

Un manchon 81 à section interne légèrement supérieure à la section de la branche 12, est montée coulissant autour de celle-ci en étant commandé en altitude par un vérin 82. Le vérin 82 permet de régler en hauteur la position du manchon 81 comme représenté par la double flèche F₅ à la figure 1.

Un caisson 83 est monté sur le manchon 81 et s'étend selon une direction globalement perpendiculaire à celle de la branche 12. Le caisson 83 renferme un vérin 84 dont la tige de commande contrôle un bras 85 à l'extrémité duquel est montée une double fourche 86 prévue pour supporter le portique 74.

Ainsi, les éléments 81 à 86 permettent de contrôler le positionnement de la prétailleuse 7 par rapport au demi-châssis 10. On comprend que les vérins 82 et 83 sont commandés au moyen de la poignée 65 et alimentés en puissance par l'ensemble 52.

Selon un aspect non représenté de l'invention, il est possible de régler l'écartement relatif des roues 72 et 73.

Un tuyau flexible 87 est prévu pour relier la prétailleuse 7 au caisson 83, en vue de l'alimentation de cet outil en fluide hydraulique d'actionnement des roues 72 et 73. En variante et selon un aspect non représenté de l'invention, un câble de raccordement électrique peut également être prévu.

Lorsque le porte-outils M est utilisée avec la prétailleuse 7, la nacelle 6 est maintenue à proximité du U formé des éléments 21 à 23 du demi-châssis arrière 20. Dans ces conditions, l'opérateur a une très bonne visibilité de la zone de pré-taillage d'un cep C.

A la place de la pré-tailleuse 7, d'autres outils peuvent être montés sur le demi-châssis 10, tels que des systèmes de projection de produits de traitement, éventuellement pourvus de panneaux récupérateurs, une épampreuse, une rogneuse, une releveuse ou une effeuilleuse, etc .... D'autres outils tels qu'un broyeur à sarments, un ensemble de soufrage ou un gyrobroyeur peuvent également être adaptés sur le demi-châssis avant 10 ou arrière 20. Les différents outils mentionnés ci-dessus ne sont pas tous représentés mais sont connus de l'homme du métier.

Ces différents outils travaillent globalement dans une zone Z voisine du plan de symétrie P_{U} du U formé des éléments 11 à 13, de sorte qu'ils ne sont pas notablement en porte-à-faux par rapport à la structure qui les supporte, ce qui est tout à fait favorable sur le plan mécanique. La zone Z est représentée en grisé à la figure 2.

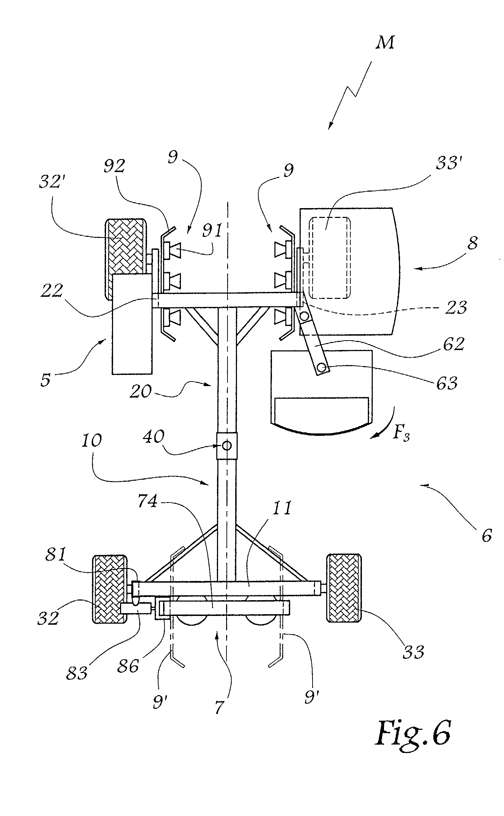

Comme représenté à la figure 6, le porte-outils peut être équipée d'un réservoir 8 de produit de traitement de la vigne, par exemple un produit phyto-sanitaire. Ce réservoir 8 est monté sur le demi-châssis arrière 20, au niveau de la branche 23. Dans ce cas, la nacelle 6 peut être amenée vers l'avant du porte-outils M, comme représenté par la flèche F₃ à la figure 6, ce qui permet de dégager la zone d'installation du réservoir 8. Un système 9 connu d'aspersion des ceps peut être monté au niveau du U formé des éléments 21 à 23. Il comprend des buses 91 de projection 8 et des panneaux récupérateurs 92. Des moyens de connexion analogues à ceux mentionnés en référence au demi-châssis antérieur 10 peuvent être prévus sur le demi-châssis postérieur 20, de même que des moyens de montage mécaniques de différents accessoires.

Comme représenté en traits mixtes à la figure 6, un second système de projection 9' peut être monté sur le demi-châssis avant 10. En variante, tout autre outil de traitement de la vigne peut être utilisé concomitamment au réservoir 8 et au système 9.

Compte tenu de la structure du porte-outils M, l'adaptation des différents outils ou accessoires à utiliser pour la culture et la conduite de la vigne est particulièrement simple, alors que la manoeuvrabilité du porte-outils est excellente, d'où une économie et un confort d'utilisation substantiels pour l'exploitant.

Selon un aspect non représenté de l'invention, le porte-outils M peut être équipé d'une rotule permettant de compenser le roulis pouvant résulter d'un défaut de planéité de la surface S du sol sur laquelle évolue la machine. Il est également possible d'utiliser un cardan pour constituer l'articulation entre les demi-châssis antérieur et postérieur, ce qui permet de créer également une possibilité de pivotement autour d'un axe parallèle à l'axe médian X-X', en particulier autour de la projection de l'axe X-X' au centre des poutres 14 et 24. On peut ainsi compenser les irrégularités de la surface S sur laquelle avance le porte-outils M et le mouvement de roulis qu'elles pourraient induire.

Selon un autre aspect non représenté de l'invention, les branches 12, 13, 22 et 23 peuvent être équipées d'amortisseurs qui permettent également de compenser des irrégularités de la surface S.

Par ailleurs, la longueur des branches 12, 13, 22 et 23 peut être prévue réglable, afin d'adapter le positionnement du porte-outils M à un travail sur une surface S en dévers.

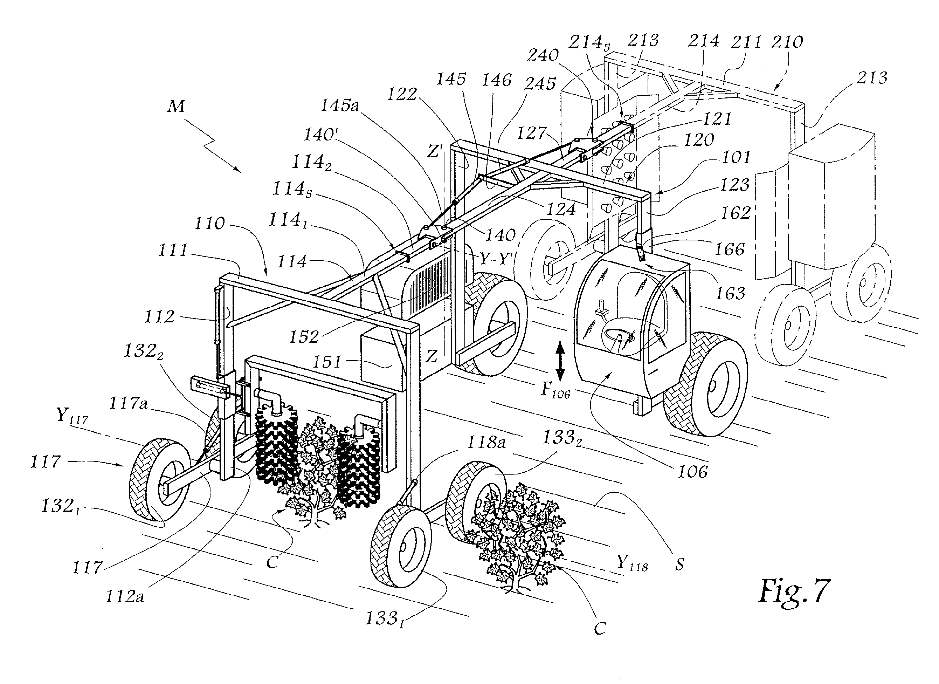

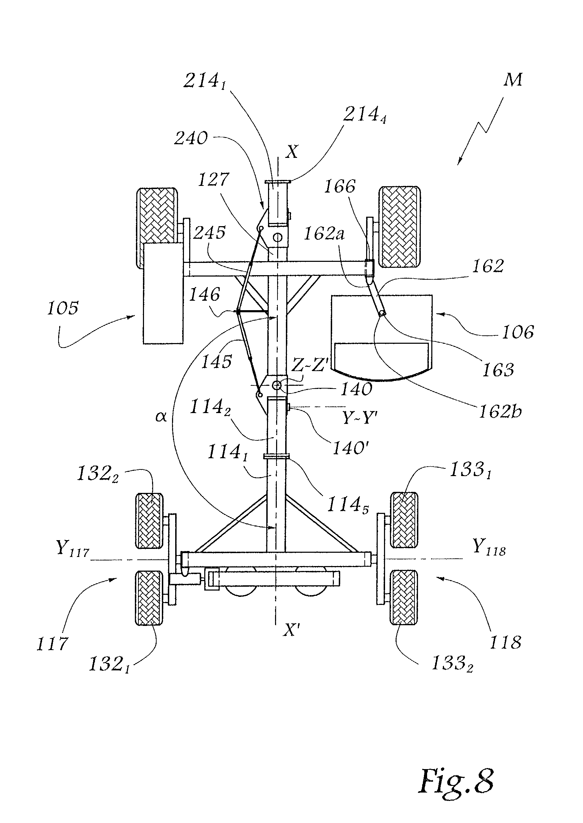

Dans le second mode de réalisation de l'invention représenté aux figures 7 à 9, les éléments analogues à ceux du premier mode de réalisation portent des références identiques augmentées de 100.

Le châssis 101 de ce mode de réalisation comprend un demi-châssis antérieur 110 et un demi-châssis postérieur 120.

Le demi-châssis antérieur 110 forme un U renversé constitué par une traverse 111 et deux branches 112 et 113. De même une traverse 121 et deux branches 122 et 123 forment un U au niveau du demi-châssis postérieur 120.

Deux poutres 114 et 124 relient les demi-châssis 110 et 120 au niveau d'une articulation 140 permettant un mouvement de pivotement autour d'un axe Z-Z' perpendiculaire à la surface S sur laquelle repose le porte-outil M et perpendiculaire à un axe médian X-X' de ce porte-outils.

La branche 112 est équipée, au niveau de son extrémité inférieure 112a d'un boggie 117 sur lequel sont montées deux roues 132₁ et 132₂. De la même façon, la branche 113 porte au niveau de son extrémité inférieure libre 113a un boggie 118 pourvu de deux roues 133₁, 133₂. Les roues 131₁ et 132₂ d'une part, 133₁ et 133₂ d'autre part sont décalées le long de l'axe X-X' lorsque le porte-outils M est en configuration d'avance rectiligne. Le boggie 117 est prévu pour pouvoir pivoter autour d'un axe Y₁₁₇ perpendiculaire à la branche 12. Un vérin 117a permet de commander le pivotement du boggie 117 autour de l'axe Y₁₁₇. De la même façon, le boggie 118 est prévu pivotant autour d'un axe Y₁₁₈ perpendiculaire à la branche 13 en étant commandé par un vérin 118a.

Les vérins 117a et 118a ne sont pas toujours actifs, de telle sorte que, en fonction des irrégularités de la surface S, les boggies 117 et 118 peuvent pivoter librement autour des axes Y₁₁₇ et Y₁₁₈, avec une amplitude de mouvement limitée. Ceci permet de configurer au porte-outil M une bonne stabilité, y compris lorsque la surface S est accidentée.

En outre, l'utilisation des boggies 117 et 118 permet d'améliorer les facultés de braquage du porte-outils M dans la mesure où, lorsqu'on souhaite effectuer un virage vers la gauche, on peut actionner les vérins 117a et 118a de telle sorte que seules les roues 132₁ et 133₂ sont au contact de la surface S. On procède inversement pour un virage à droite.

La nacelle 106 de ce porte-outils est supportée par une articulation pendulaire 163 à une extrémité 162b d'une poutre 162 dont l'autre extrémité 162a est articulée, avec possibilité de rotation, sur un manchon 166 coulissant le long de la branche 123 du demi-châssis postérieur 120. Le coulissement du manchon le long de la branche 123 est commandé au moyen d'un vérin hydraulique non représenté et permet de régler la hauteur de la nacelle 106 par rapport à la surface S, ce qui permet d'abaisser la nacelle 106 pour y accéder et de la remonter en fonction du type d'outil monté sur le porte-outils M, comme représenté par la double flèche F₁₀₆ à la figure 7.

Un vérin double effet 145 est monté sur une platine 146 disposée sur la poutre 124 à proximité de l'articulation 140, la tige 145a du vérin 145 permettant de contrôler l'angle α d'orientation relative des poutres 114 et 124.

Une seconde articulation 140' est prévue dans la poutre 114 autour d'un axe Y-Y' perpendiculaire aux axes X'X' et Z-Z'. Cette articulation, dont les amplitudes de mouvement sont limitées, permet d'adapter la géométrie du châssis 1 à d'éventuelles irrégularités de la surface S. En outre, selon un aspect non représenté de l'invention, une articulation autour d'un axe parallèle ou confondu avec l'axe médian X-X' peut être prévue pour compenser ces mêmes irrégularités et éviter tout renversement du porte-outils M.

La poutre 114 n'est pas monobloc, mais est constituée d'un assemblage de deux segments 114₁ et 114₂ assemblés par des brides 114₃, 114₄ au niveau d'une zone de fixation 114₅. Les brides précitées sont assemblées de façon réversible, par exemple par des boulons non représentés.

En agissant au niveau de la zone 114₅, il est donc possible, de désolidariser la partie avant du demi-châssis 110 par rapport au demi-châssis 120.

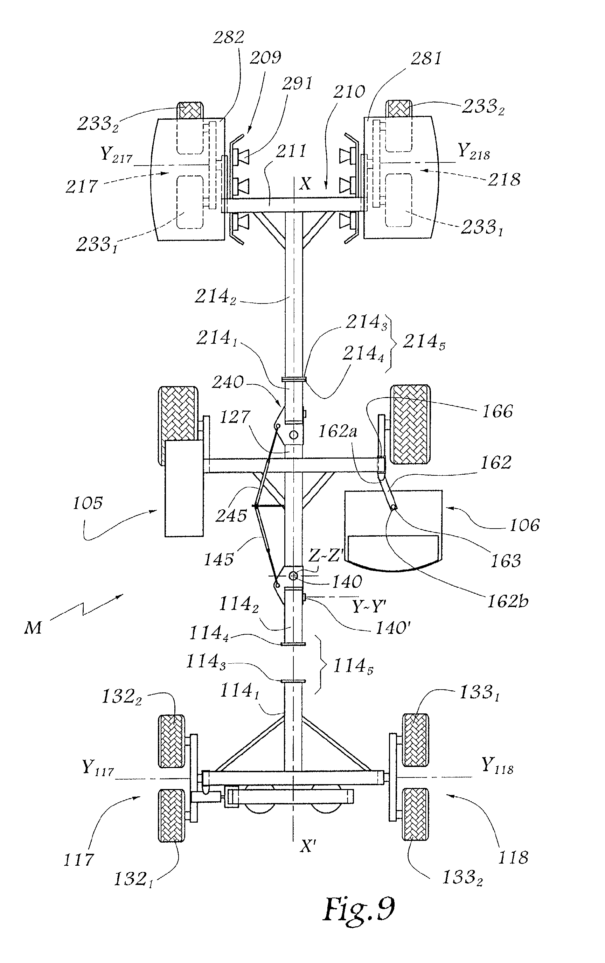

Par ailleurs, il est prévu un troisième demi-châssis 210 plus particulièrement visible à la figure 9 et qui est destiné à être articulé sur le demi-châssis postérieur 120 au niveau d'une articulation 240 analogue à l'articulation 140.

Pour ce faire, le demi-châssis 120 est équipé d'une poutre 127 s'étendant à l'opposé de la poutre 124 par rapport à la traverse 121 et dont l'extrémité libre est prévue pour constituer l'articulation 240.

Le demi-châssis 210 comprend quant à lui une traverse 211, à partir de laquelle s'étendent vers le bas deux branches 212 et 213 qui forment avec la traverse 211 un U renversé, et une poutre 214 destinée à être articulée sur la poutre 217 au niveau de l'articulation 240.

La poutre 214 est formée de deux segments 214₁ et 214₂ reliés par des brides 214₃ et 214₄ au niveau d'une zone de fixation 214₅, de façon similaire à celle évoquée pour la poutre 114.

Les branches 212 et 213 sont respectivement équipées de boggies 217 et 218 analogues à ceux équipant le demi-châssis antérieur 110 et pourvus chacun de deux roues 232₁, 232₂, 233₁, 233₂. Chaque boggie 217 et 218 est susceptible de pivoter par rapport aux branches 212 et 213 autour d'un axe Y₂₁₇, respectivement Y₂₁₈.

Le demi-châssis 210 est équipé de deux réservoirs 281 et 282 contenant un produit de traitement et prévu chacun pour alimenter des buses 291 appartenant à un dispositif de projection 209 d'un produit phyto-sanitaire.

Des moyens non représentés permettent de raccorder les éléments 281, 282 et 291 à un ensemble hydraulique 152 prévu sur le demi-châssis postérieur 120 et associé à un moteur thermique 151 pour constituer un ensemble de motorisation 105.

L'assemblage des demi-châssis 120 et 210 au niveau de la zone 214₅ est réversible, de sorte que le demi-châssis 210 peut être remorqué par le demi-châssis 120 uniquement lorsqu'on souhaite utiliser le dispositif 209.

Dans ce cas, il est possible de désolidariser les châssis 110 et 210 comme mentionné ci-dessus, afin de faciliter la manoeuvre du porte-outils M.

Des moyens de contrôle de l'orientation relative des poutres 127 et 214 peuvent être prévus sous la forme d'un second vérin 245 monté sur la platine 146 et attaquant l'articulation 240. D'autres types de moyens de contrôle pourraient être prévus.

En variante, le vérin 145 peut être monté pivotant d'avant en arrière sur la platine 146, de telle sorte qu'il peut attaquer l'une ou l'autre des articulations 140 ou 240.

Lorsque le demi-châssis 210 est relié au demi-châssis 120, la distance entre les roues des demi-châssis est sensiblement égale à la distance entre les roues des demi-châssis 110 et 120 lorsque ceux-ci sont reliés, afin de conserver un même rayon de braquage minimum sans risque d'interférence entre les demi-châssis.

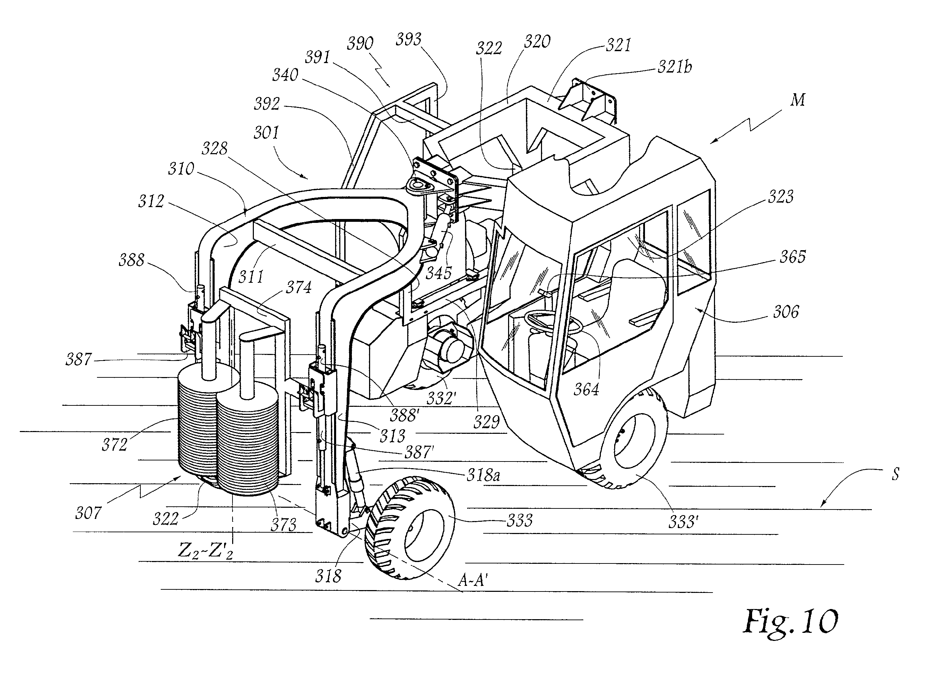

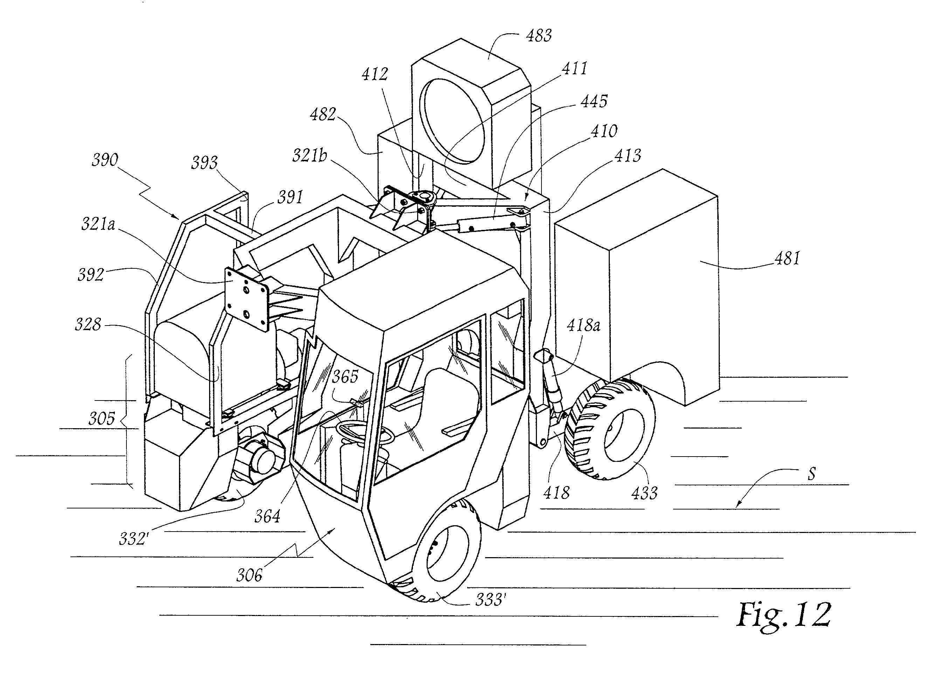

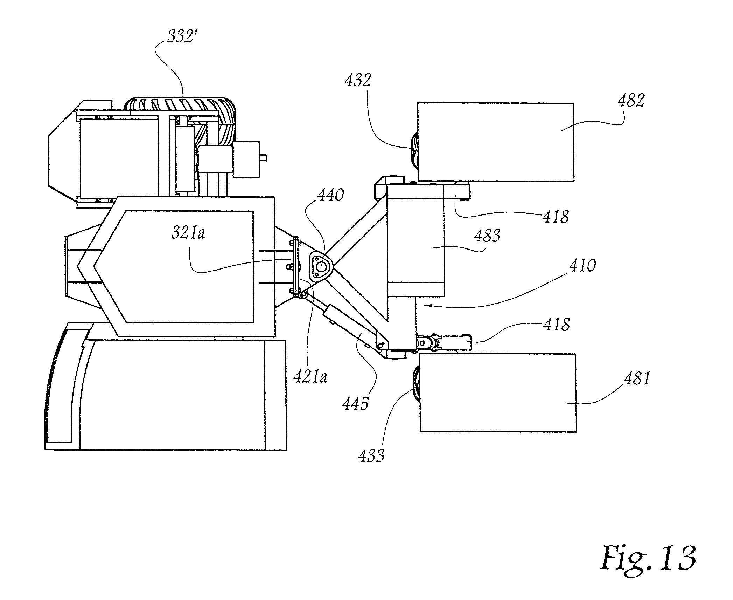

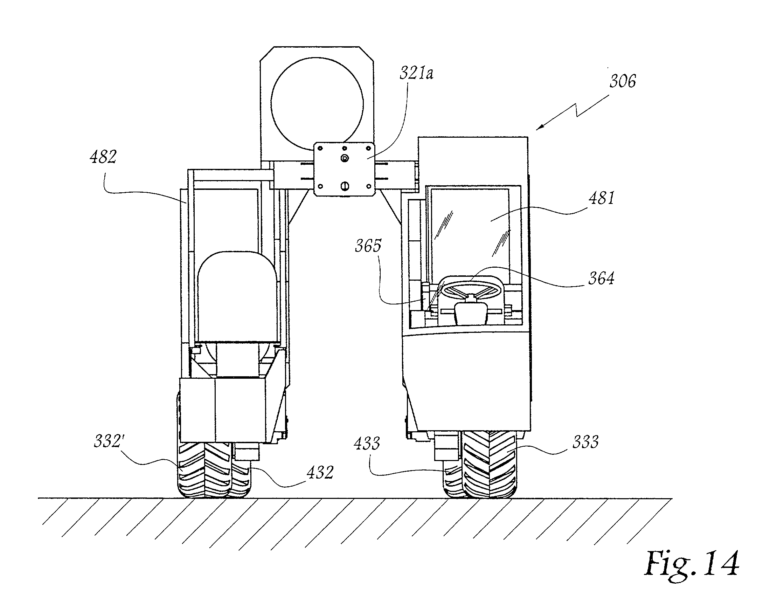

Dans le troisième mode de réalisation de l'invention représenté aux figures 10 à 14, les éléments analogues à ceux du premier mode de réalisation portent des références identiques augmentées de 300. La machine porte-outils M de ce mode de réalisation comprend un châssis 301 qui supporte un ensemble de motorisation 305 et une nacelle de pilotage 306. Comme précédemment, le châssis 301 est bi-partite et est consistué d'un demi-châssis antérieur 310 et d'un demi-châssis postérieur 320 qui ont, en vue par l'avant ou par l'arrière de la machine M, une forme de U renversé.

Le demi-châssis 310 comprend deux branches 312 et 313 qui convergent vers une articulation 340 reliant les demi-châssis 310 et 320. Une traverse 311 relie les branches 312 et 313, ce qui permet de rigidifier le demi-châssis 310.

Une pré-tailleuse 307 est supportée par le demi-châssis 310 en étant mobile verticalement selon une direction Z₂-Z'₂ perpendiculaire à la surface du sol S sur laquelle repose la machine M. La pré-tailleuse 307 comprend un portique 374 sur lequel sont montées deux roues de pré-taillage 372 et 373. Le portique 374 est en appui sur deux supports 387 et 387' mobiles respectivement le long des branches 312 et 313.

Les supports 387 et 387' sont commandés dans leur déplacements verticaux respectifs par des vérins 388 et 388'. On note que, en cas de besoin, les supports 387 et 387' peuvent être disposés à des hauteurs différentes, ce qui permet de régler l'inclinaison de la pré-tailleuse 307.

A l'extrémité inférieure de la branche 313, est monté un bras 318 qui peut osciller autour d'un axe A-A' globalement perpendiculaire à la direction principale de la branche 313 dans cette zone. A l'opposé de la partie du bras 318 qui est articulée autour de l'axe A-A' sur la branche 313, ce bras porte une roue 333 d'appui sur le sol. Un vérin 318a permet de contrôler le pivotement du bras 318 autour de l'axe A-A' et, notamment, d'amortir les vibrations dues aux irrégularités de la surface du sol S par l'utilisation d'un accumulateur hydraulique

De la même façon, une roue 332 est montée sur un bras oscillant 318 à l'extrémité inférieure de la branche 312.

Le demi-châssis postérieur 320 comprend une partie supérieure 321 en forme d'anneau et qui supporte deux platines 321a et 321b permettant respectivement la fixation et l'articulation du demi-châssis avant 310 et d'un troisième demi-châssis 410 ayant sensiblement la même fonction que le demi-châssis 210 du second mode de réalisation.

A partir de la partie 321, le demi-châssis 320 se prolonge par deux branches 322 et 323 à l'extrémité inférieure desquelles sont montées deux roues 332' et 333'. Des bras oscillants du type des bras 318 sont prévus à l'extrémité inférieure des branches 322 et 323 et sont contrôlés par des vérins du type des vérins 318a. Ainsi, les quatre roues de la machine M sont toujours au contact du sol.

En outre, les vérins 318a du demi-châssis avant 310 sont des vérins à simple effet dont les chambres sont reliées entre elles de telle sorte qu'une compression de l'un de ces vérins induit une expansion de même amplitude de l'autre vérin, ces vérins étant de même cylindrées. Par exemple, si la roue 332 roule sur un obstacle, le vérin correspondant est comprimée et le vérin 318a du bras 318 s'expand, ce qui a pour effet de faire basculer vers le bas la roue 333, en conservant ainsi l'assiette de la machine M.

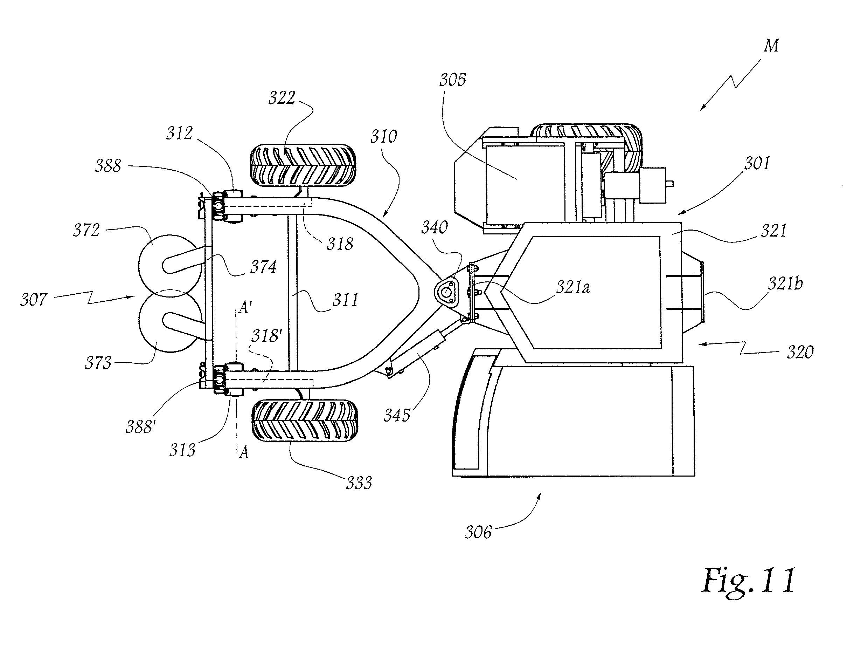

Une nacelle 306 est montée sur la branche 323, au-dessus de la roue 333', ce qui permet une excellente visibilité de la zone de travail de la pré-tailleuse 307 dans la configuration des figures 10 et 11.

Le demi-châssis 320 forme également une troisième branche 328 qui s'étend vers le bas à partir de la partie 321 et qui est reliée à la branche 322 par une traverse 329 de rigidification. Un portique 390 s'étend à partir de la partie 321 et comprend une traverse supérieure 391 et deux branches 392 et 393 reliées à cette traverse. L'ensemble des éléments 328, 329 et 390 constituent un berceau formant support pour l'ensemble de motorisation 305.

Comme précédemment, le poids de la nacelle 306 et de l'ensemble de motorisation 305 confère à la machine porte-outils M une bonne stabilité.

Comme dans le second mode de réalisation, le demi-châssis 410 peut être accroché à l'arrière du demi-châssis 320 au moyen de la platine 321b et d'une platine 421a prévue sur le demi-châssis 410 et associée à une articulation 440. Le demi-châssis 410 peut supporter des réservoirs 481 et 482 contenant un produit de traitement. Une turbine de pulvérisation 483 est montée sur le demi-châssis 410.

Le demi-châssis 410 a également une forme de U renversé, avec une traverse supérieure 411 et deux branches 412 et 413 qui s'étendent vers le bas à partir de cette traverse. En partie inférieure des branches 412 et 413 sont montés des bras oscillants 418 contrôlés par des vérins 418a et sur lesquels sont montées des roues 432 et 433.

Le contrôle de l'orientation relative des demi-châssis 310 et 320 est réalisé grâce à un vérin 345 alors que le contrôle de l'orientation relative des demi-châssis 320 et 410 est réalisé par un autre vérin 445. Ces vérins sont, en fonction de la configuration d'utilisation, commandés par un volant 364 situé dans la nacelle 306.

Par ailleurs, une manette 365 est également prévue dans la nacelle 306 pour le contrôle de la pré-tailleuse 307 ou d'un autre outil monté sur le demi-châssis 310 ou sur le demi-châssis 410, selon la configuration d'utilisation.

L'invention n'est pas limité aux modes de réalisation décrits et couvre les variantes évidentes pour l'homme du métier. En particulier, les caractéristiques techniques des trois modes de réalisation représentés peuvent être combinées entre elles.

L'invention a été représentée pour une utilisation dans le domaine viticole. Elle peut s'appliquer à toute autre culture en lignes, par exemple la culture de cassis, de framboisiers, d'arbres ou arbustes fruitiers.

## Revendications

1. Porte-outils pour culture en lignes comprenant un châssis enjambeur, apte à supporter des outils et/ou accessoires de traitement de la vigne, ledit châssis (1 ; 101 ; 301) comprenant un demi-châssis antérieur (10 ; 110, 120 ; 310, 320) et un demi-châssis postérieur (20 ; 120, 210 ; 320, 410) articulés (en 40 ; 140 ; 240 ; 340, 440) l'un sur l'autre en partie haute dudit châssis, chaque demi-châssis ayant, en vue par l'avant ou par l'arrière dudit porte-outils, une forme globalement en U renversé, lesdits demi-châssis étant aptes à pivoter (P) l'un par rapport à l'autre autour d'un axe (Z-Z') globalement perpendiculaire à une surface (S) sur laquelle repose ledit porte-outils (M), **caractérisé en ce qu'**il comprend une nacelle de pilotage (6, 106 ; 306) montée sur une branche (23 ; 123 ; 323) de l'un des U formés par lesdits demi-châssis.

2. Porte-outils selon la revendication 1, **caractérisé en ce qu'**il comprend des moyens (42-45 ; 145, 245 ; 345, 445) d'ajustement de la position relative desdits demi-châssis (10, 20 ; 110, 120, 210 ; 310, 320, 410) en pivotement (P) autour dudit axe (Z-Z'), pour le contrôle de la direction d'avance (F₁, F₂) dudit porte-outils (M).

3. Porte-outils selon la revendication 2, **caractérisé en ce que** ladite nacelle (6 ; 106 ; 306) est pourvue d'au moins un organe (64 ; 364) pour la commande desdits moyens d'ajustement (44, 45 ; 145, 245 ; 345, 445) et d'un organe (65 ; 365) de contrôle d'un outil (7 ; 307) monté sur ledit porte-outils (M).

4. Porte-outils selon l'une des revendications précédentes, **caractérisé en ce que** ladite nacelle (6) est mobile (F₃) d'avant en arrière par rapport audit châssis (1).

5. Porte-outils selon l'une des revendications précédentes, **caractérisé en ce que** ladite nacelle (106) est réglable en hauteur (F₁₀₆) par rapport audit châssis (101).

6. Porte-outils selon l'une des revendications précédentes, **caractérisé en ce que** ladite nacelle (6 ; 106) est suspendue à une poutre (62 ; 162) montée pivotante par rapport à ladite branche (23 ; 123), autour d'un axe (Z₁, Z'₁) globalement parallèle à l'axe (Z-Z') de pivotement relatif (P) desdits demi-châssis (10, 20 ; 110, 120, 210).

7. Porte-outils selon l'une des revendications prédédentes, **caractérisé en ce qu'**il comprend des moyens (140') de compensation des irrégularités ou du dévers d'une surface sur laquelle repose ou avance ledit porte-outils (M).

8. Porte-outils selon l'une des revendications précédentes, **caractérisé en ce que** lesdits demi-châssis (110, 120 ; 310, 320) sont séparables l'un de l'autre, le demi-châssis postérieur (120 ; 320) étant pourvu de moyens (240 ; 440) d'articulation avec un troisième demi-châssis (210 ; 410) qu'il peut remorquer.

9. Porte-outils selon la revendication 8, **caractérisé en ce que** ledit troisième demi-châssis (210 ; 410) est équipé d'au moins un réservoir (281, 282 ; 481, 482) de produit(s) de traitement.

10. Porte-outils selon l'une des revendications précédentes, **caractérisé en ce qu'**il comprend un ensemble de motorisation (5 ; 105 ; 305) monté sur une (22 ; 122 ; 322) des branches de l'un desdits demi-châssis (10, 20 ; 110, 120 ; 310, 320) autre que celle (23 ; 123 ; 323) sur laquelle est montée ladite cabine (6 ; 106 ; 306).

11. Porte-outils selon l'une des revendications précédentes, **caractérisé en ce que** chaque branche (12, 13, 22, 23 ; 112, 113, 122, 123) des U formés par lesdits demi-châssis (10, 20 , 110, 120) est équipée, à proximité de son extrémité libre (12a, 13a, 22a, 23a) d'une roue (32, 33, 32', 33' ; 132₁, 132₂, 133₁, 133₂ ...) dont l'axe de rotation (A₃₂, A₃₃, A'₃₂, A'₃₃) est fixe par rapport à ladite branche.

12. Porte-outils selon l'une des revendications 1 à 10, **caractérisé en ce que** certaines au moins (112, 113, 212, 213) des branches des U formés par lesdits demi-châssis (120, 210) sont équipées de boggies (117, 118, 217, 218) portant chacun au moins deux roues (132₁, 132₂, 133₁, 133₂) décalées selon la direction d'avance (X-X') dudit porte-outils (M).

13. Porte-outils selon l'une des revendications 1 à 10, **caractérisé en ce que** certaines au moins des branches (312, 313, 322, 323, 412, 413) des U formés par lesdits châssis (310, 320, 410) sont équipées de bras oscillants (318, 418) sur chacun desquels est montée au moins une roue (332, 332', 333, 333', 432, 433).

14. Porte-outils selon l'une des revendications 12 ou 13, **caractérisé en ce qu'**il comprend des moyens (117a, 118a, 318a, 418a) de commande ou d'amortissement du pivotement de certains au moins desdits boggies (117, 118, 217, 218) ou desdits bras oscillants (318, 418) autour d'un axe (Y₁₁₇, Y₁₁₈ ; A-A') globalement parallèle à une surface (S) sur laquelle avance ledit porte-outils (M).

15. Porte-outils selon l'une des revendications précédentes, **caractérisé en ce que** l'un (10, 20 ; 110, 120, 210 ; 310, 320, 410) au moins desdits demi-châssis est équipé de moyens de montage et, éventuellement, de raccordement hydraulique, mécanique et/ou électrique des outils avec des moyens d'entraînement (52 ; 152) lesdits outils étant situés globalement dans une zone (Z) voisine d'un plan (P_{U}) défini par les branches (12, 13, 22, 23 ; 112, 113, 122, 123, 212, 213 ; 312, 313) du U renversé formé par ledit demi-châssis.

16. Porte-outils selon l'une des revendications précédentes, **caractérisé en ce que** l'un (20 ; 210 ; 410) au moins desdits demi-châssis (10, 20 ; 110, 120, 210 ; 310, 320, 410) est apte à supporter un réservoir (8 ; 281, 282 ; 481, 482) de produit(s) de traitement associé à des moyens de projection (9, 9' ; 209) dudit ou desdits produit(s) monté sur le même demi-châssis (20 ; 210 ; 410) ou sur l'autre demi-châssis (10 ; 120 ; 320).

17. Porte-outils selon l'une des revendications précédentes, **caractérisé en ce qu'**il comprend des moyens (81-86 ; 388, 388') de contrôle du positionnement (F₅, F₆) des outils (7 ; 307) montés sur ledit porte-outil par rapport à l'un (10 ; 310) des demi-châssis.

18. Utilisation d'un porte-outils selon l'une des revendications précédentes pour la culture de la vigne.
